# EUROPEAN PATENT APPLICATION

(11) **EP 4 793 855 A1**
(43) Date of publication of application: **19.08.2026**
(21) Application number: 25178418.7
(22) Date of filing: 23.05.2025
(51) Int. Cl.: G06Q 20/06, G06Q 20/10, G06Q 20/38, G06Q 20/40

(54) **AN INTER-BANK CROSS-BORDER CLEARING AND SETTLEMENT SYSTEM**

(30) Priority: 18.02.2025 HK 22025103604
(71) Applicant: Bison Business Development Limited, North Point, Hong Kong (HK)
(72) Inventor: Xiao, Bo, North Point (HK)
(74) Representative: Chung, Hoi Kan

(57) **Abstract**

An inter-bank cross-border clearing and settlement system, are compatible with SWIFT message formats and enhance the sharing mechanism for KYC/AML information, employing encryption and differentiating access permissions for different related parties. Interbank messages are transferred as part of specific stable coin, ensures that the system is more secure, transparent, and traceable.

## Description

### FIELD OF THE INVENTION

The present invention involves a clearing and settlement system between banks.

### BACKGROUND OF THE INVENTION

The Society for Worldwide Interbank Financial Telecommunication (SWIFT) has been the backbone of global cross-border transactions since 1973. It operates as a messaging network, enabling financial institutions to securely transmit payment orders. However, SWIFT does not handle fund transfers directly; instead, it relies on a network of correspondent banks to settle transactions. This process introduces multiple intermediaries, leading to delays (often 1-5 days), higher costs (due to fees from each intermediary and forex conversions), and opacity in transaction tracking. While SWIFT's standardized messaging (MT/MX formats) ensures interoperability, its centralized architecture and legacy infrastructure struggle with inefficiencies in today's demand for real-time, low-cost transactions.

Blockchain technology, a decentralized ledger system, offers transformative potential for clearing and settlement by addressing SWIFT's limitations.

### SUMMARY OF THE INVENTION

In view of the aforesaid drawbacks of the prior art, the present invention provides an inter-bank cross-border clearing and settlement system to solve the problems.

The present invention provides:
An inter-bank cross-border clearing and settlement system, comprising;
a specific clearing and settlement service system, including a blockchain interactor, an encryption and decryption module, and a message handling module;
a specific stable coin for transferring the fiat currencies value and risk control information;
a specific blockchain ledger deployed on a blockchain for providing an immutable record of all transactions;
a switch module for routing to the network of the blockchain or third party clearing and settlement systems;
when an inter-bank cross-border clearing and settlement is raised, an initiating bank sends request to the switch module, the banking switch select the network route;
if a third party clearing and settlement system is selected, the switch module routes to the third party clearing and settlement systems and finishes the transaction with a receiving bank;
if the blockchain route is selected, a blockchain based transaction process as follow: the information of transaction sends to the specific clearing and settlement service system for encrypting the original information of transaction by the encryption and decryption module to generate a specific stable coin, performing blockchain broadcast by the blockchain interactor to deploy to the specific blockchain ledger, sending message to the receiving bank, and the specific clearing and settlement service system of the receiving bank decrypts the specific stable coin to finish the transaction.

Further, one or more intermediary banks deployed with the specific clearing and settlement service system, are provided between the initiating bank and the receiving bank for at least one of which do not deploy with the specific clearing and settlement service system to execute the clearing and settlement service.

Further, the specific stable coin embeds with DID information as follows: transaction initiator information, transaction receiver information, traction description and AML/KYC information.

Further, the DID information also includes user behavior profiling as follows: transaction type, transaction risk and credit risk.

Further, a monitoring and auditing tool is provided for participants of the transaction and/or regulatory parties with authorized permission to inspect the information of the specific stable coin.

Further, a blockchain based transaction process between parties both deployed with the specific clearing and settlement service system,
a. initiation: the initiating party, which must be equipped with the specific clearing and settlement service system, such as an initiating bank, send a remittance message to the specific clearing and settlement service system;
b. verification: the specific clearing and settlement service system checks for message format, duplicate entries, digital signature legitimacy, and business legitimacy;
c. parsing and ledger update: the specific clearing and settlement service system checks whether the available balance of the specific stable coin in the account of the initiating party can meet the amount of the transaction, then parses the transaction information in the message which serves as the basic transaction information for blockchain ledger entries; the transaction currency is converted into the corresponding specific stable coin with the transaction amount; the blockchain addresses of the transaction parties are the chain addresses of the initiating and receiving the message; the encryption and decryption module encrypts the original transaction message to create an encrypted message, which is then used as the input information in the blockchain ledger's memo;
d. reception: when the message handling module of the receiving party, which must also be equipped with the specific clearing and settlement service system, such as a receiving bank, detects a block change in its blockchain address, the receiving party retrieves the new block information pass it to the encryption and decryption module to decrypt the memo in the block transaction information to obtain the original message and forward to the receiving party.

Further, the bank which does not deploy with the specific clearing and settlement service system deals the clearing and settlement service with the intermediary bank by the third party clearing and settlement system; and a blockchain based transaction process is raised between the intermediary banks and /or the bank which deploy with the specific clearing and settlement.

The present invention has the following advantages: Blockchain's decentralized, automated, and transparent architecture offers a compelling alternative to SWIFT's legacy system, particularly for cross-border clearing and settlement. While challenges remain, technology's ability to reduce costs, accelerate settlements, and enhance security positions it as a pivotal innovation for the future of global finance. As institutions and regulators collaborate on standards and scalability, blockchain could redefine financial infrastructure, complementing or eventually supplanting traditional systems like SWIFT as follows:
Speed and Efficiency: Blockchain enables near-instant settlement (seconds/minutes) through peer-to-peer transactions, eliminating the need for correspondent banking chains. Smart contracts automate clearing (validation, reconciliation) and settlement, reducing manual intervention.
Cost Reduction: By removing intermediaries, blockchain slashes transaction fees. Cross-border payments using stablecoins or central bank digital currencies (CBDCs) could further reduce forex costs.
Transparency and Immutability: All parties access real-time transaction status on an immutable ledger, minimizing disputes and enhancing auditability.
Security: Decentralization reduces single points of failure, and cryptographic encryption ensures robust protection against fraud.
24/7 Availability: Unlike SWIFT's batch processing and limited operating hours, blockchain operates continuously, aligning with global markets' non-stop nature.

The blockchain's advantages in practice of inter-bank cross-border clearing and settlement are as follows,

Smart Contracts: Automate compliance (e.g., embedding AML/KYC rules) and enforce settlement terms.

### BRIEF DESCRIPTION OF THE DRAWINGS

Below are explanations of the invention combining with drawings.
FIG.1 is the system architecture diagram of the present invention.
FIG. 2 is the workflow of a single transfer by a member bank of the present invention.
FIG.3 is the workflow of fund transfer through intermediary bank of the present invention.
FIG.4 is the workflow of member bank fund position management of the present invention.
FIG.5 is the workflow of refund of the present invention.

### DESCRIPTION OF THE EMBODIMENTS

The inter-bank cross-border clearing and Settlement system (named Remi System) uses blockchain technology to facilitate information transfers between member banks, replacing traditional centralized clearing and settlement networks. Fund transfers between member banks are executed by transmitting Remi Stablecoins, known as Remi Coin, along with synchronized KYC/AML information.

The Remi System supports 24/7 real-time interaction, making information transfers between member banks simpler, more efficient, and faster, particularly advantageous in cross-border remittance scenarios compared to traditional clearing and settlement methods. Blockchain technology in the Remi System addresses the need for mutual trust and equity among banks. This technology ensures that the Remi System is more secure, transparent, and traceable.

Remi System messages are compatible with SWIFT message formats and enhance the sharing mechanism for KYC/AML information, employing encryption and differentiating access permissions for different related parties.

Interbank messages are transferred as part of Remi Stable Coins. These messages must be encrypted for privacy reasons, using W3C Decentralized Identifier (DID) for user key generation, message encryption, and decryption. We propose a decentralized Zero-Knowledge Proof (ZKP)-based payment layer built on top of Remi. We utilize the latest Zero-Knowledge Virtual Machine (zkVM) for user-side ZKP generation and on-chain ZKP verification, enabling high efficiency, low cost, and low latency.

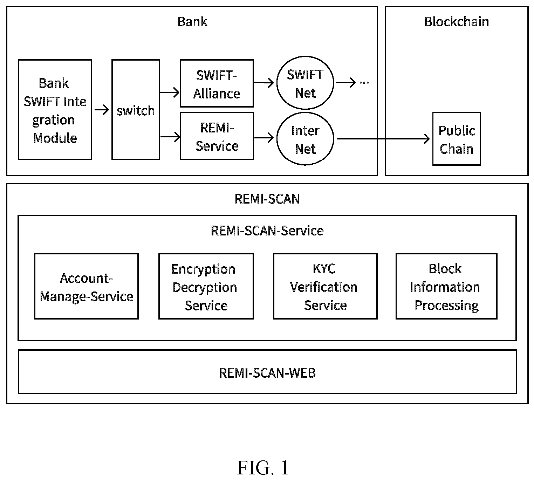

The system architecture of the Remi System is designed to facilitate seamless and efficient cross-border transactions among participating banks and financial institutions. The architecture is comprised of several key components that together ensure security, transparency, and speed in the clearing and settlement process, referring to FIG. 1.
- Blockchain ledger: At the core of the system is a blockchain-based ledger that records all transactions. This distributed ledger ensures trust and transparency by providing an immutable record of all transactions processed through the Remi System.
- The specific stable coin (named Remi Coin): As a part of the architecture, Remi Coins act as a medium for transferring value between participants. These stablecoins are pegged to fiat currencies and provide a reliable digital currency for transaction settlements.
- Switch module: Embed a Switch module in the banking system of each member bank or financial institutions, to route different fund transfers to either Swift system or Remi system.
- KYC/AML Module: The system includes a robust KYC (Know Your Customer) and AML (Anti-Money Laundering) module to ensure that all transactions comply with regulatory requirements. This module securely collects, verifies, and shares relevant information with authorized parties.
- Specific clearing and settlement service system(named REMI-Service): This is the system's functional component that handles message translation, encryption, and secure transmission of KYC/AML data. It's deployed across member banks to facilitate communication and interoperability.
- API(named REMI API): The architecture provides a standardized API for member banks to integrate with the Remi System. This API allows various functions like querying account and transaction information, managing Remi Coins, and more.
- Security Layer: Strong encryption protocols and privacy measures are implemented to secure data transmission and storage. This includes message encryption using W3C DID standards and zkVM for zero-knowledge proof transactions.
- Monitoring and auditing tool(named Remi Scan): The architecture includes tools for real-time monitoring and auditing of transactions, helping to ensure compliance and operational efficiency.

This system architecture facilitates a modern, secure, and efficient clearing and settlement platform for cross-border banking operations, leveraging cutting-edge technologies to enhance traditional banking systems.

### Transaction Process

A single transfer by a member bank client

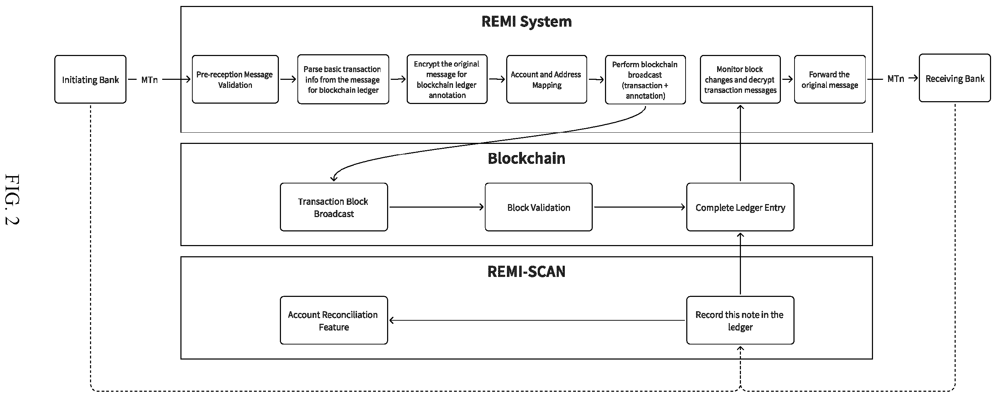

Referring to FIG. 2, a single transfer by a member bank client refers to a transfer instruction sent by a Remi member bank, either directly or through an intermediary bank, on behalf of the remitting bank or receiving bank, to another bank. This message format uses the SWIFT-MT103 format. In this type of transaction, at least one of the parties involved, either the remitter or the beneficiary, is a nonfinancial institution.

Customer remittance refers to a remittance transaction where at least one party, either the remitter or the beneficiary, is a non-financial institution. Single-initiated customer remittance transactions are settled using the real-time settlement method with REMI-COIN. Member banks can initiate a "Customer Remittance Message" (SWIFT MT103) to REMI on behalf of themselves or their correspondent banks to process this type of transaction.

### Main Process Analysis:

1. Initiation: At any time during system operation (support 24/7), the remitting bank initiates a "Customer Remittance Message" to REMI.
2. Verification: Upon receiving the message, REMI conducts checks for message format, duplicate entries, digital signature legitimacy, and business legitimacy. The business legitimacy check mainly includes the bank code of the transacting banks, the status of participating banks, business permissions, etc. For messages that pass the checks, REMI proceeds with further parsing and other operations.
3. Parsing and Ledger Update: After parsing the transaction information in the message, REMI checks whether the available balance of REMI-COIN in the account of the initiating direct participant in the REMI system is equal to or greater than the amount of the transaction (available balance = account balance - frozen amount). If the available balance is sufficient, REMI parses the basic transaction information (such as sending and receiving banks, amount, and currency), which serves as the basic transaction information for blockchain ledger entries. The transaction currency is converted into the corresponding REMI-COIN (e.g., USD to RUSD, EUR to REUR), with the transaction amount corresponding to the amount of REMI-COIN. The blockchain addresses of the transaction parties are the chain addresses of the member banks initiating and receiving the message in REMI, with the initiator as the sending address and the receiver as the receiving address. REMI encrypts the original transaction message to create an encrypted message, which is then used as the INPUT information in the blockchain ledger's memo. This ensures that all transaction ledger information is recorded in a decentralized ledger, and through the memo information of new blocks, designated participants can decrypt and verify the original transaction information using specific methods.
4. Reception: When the message receiver's system detects a block change in its blockchain address, it retrieves the new block information and decrypts the memo in the block transaction information to obtain the original MT103 message. The receiver then forwards this message to the receiving bank.

### A single remittance to an external bank

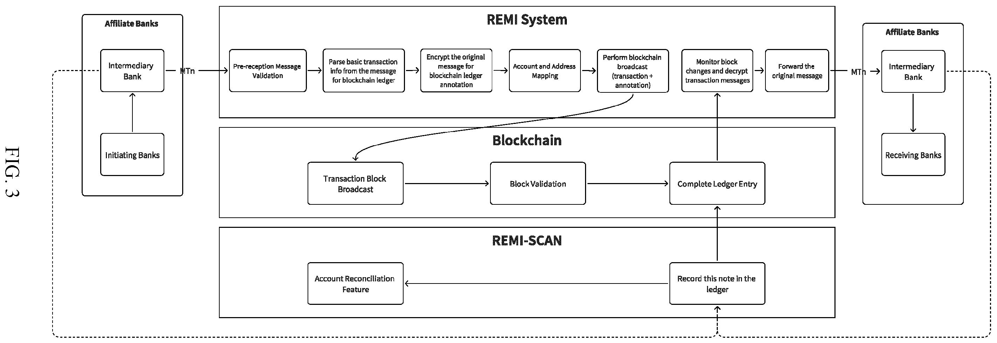

Referring to FIG. 3, a single remittance to an external bank in the REMI system refers to a transaction where at least one of the banks involved, or both, are banks outside the REMI member network. In this case, the REMI member bank acts in the role of an intermediary bank.

In practice, the process for a REMI single transfer in intermediary bank mode is the same as that for a single transfer between member banks. The difference lies in the requirement for the initiating member bank (originator) and the receiving member bank (receiver) to handle transaction information related to indirect participants. For REMI, the transaction processing remains the same; only the transaction parties' information in the messages differs.

### Member bank fund position management

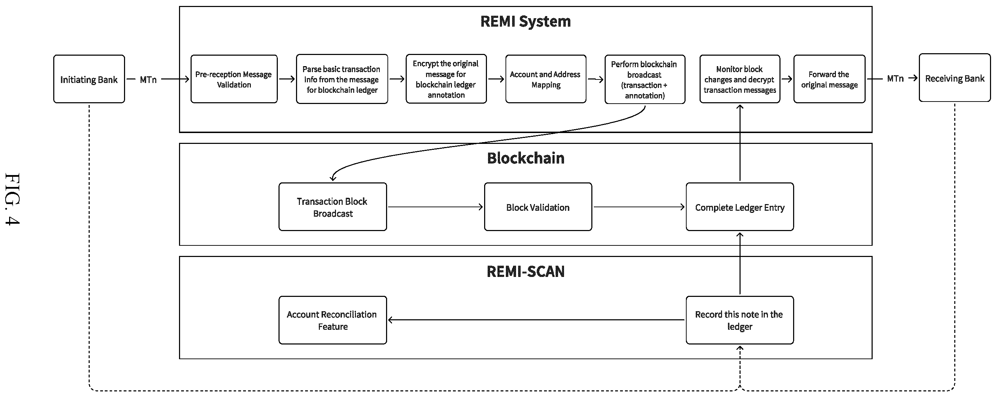

Referring to FIG. 4, this refers to a transaction where a bank, acting either directly or through an intermediary on behalf of the paying bank, sends a message to the receiving bank in order to transfer REMI-COIN positions into the receiving bank's account.

The fund allocation process between member banks is the same as the single transfer process between member banks. The primary differences are that both banks involved in the allocation must be REMI member banks, and the message format differs from that of single transfers. Typically, a single bank fund allocation requires the use of the SWIFT-MT202 message format.

### Refund

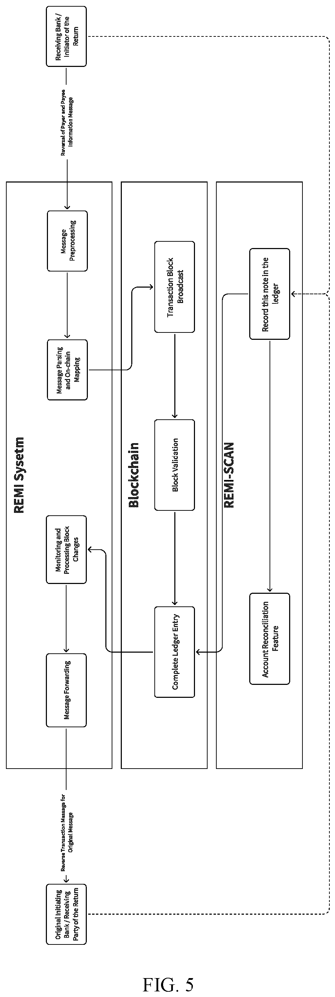

Referring to FIG. 5, REMI system does not support the direct rejection and return of single message transactions, but this can be done by performing a reverse transaction.

### Freezing and unfreezing

The operation of freezing and unfreezing REMI-COIN involves notifying REMI when funds need to be frozen within a bank's internal REMI-specific account. Position freezing refers to the situation where a member bank specifies that a certain portion of its REMI-COIN settlement funds in REMI system is frozen and cannot be used, meaning the available REMI-COIN balance for the member bank that initiated the request equals the total balance minus the frozen amount. Unfreezing refers to the release of the corresponding frozen amount. Freezing and unfreezing are carried out by invoking the REMI-API. This requires using specific interfaces provided by the REMI-API. Operations conducted via REMI-API are recorded on-chain and are reflected in REMI-SCAN, where the specific freezing or unfreezing transaction can be queried.

### Query

Query interfaces can be integrated as needed. If not integrated, information such as accounts and transactions can still be accessed and viewed using REMI-SCAN.

## Claims

1. An inter-bank cross-border clearing and settlement system, wherein comprising;
a specific clearing and settlement service system, including a blockchain interactor, an encryption and decryption module, and a message handling module;
a specific stable coin for transferring the fiat currencies value and risk control information;
a specific blockchain ledger deployed on a blockchain for providing an immutable record of all transactions;
a switch module for routing to the network of the blockchain or third party clearing and settlement systems;
when an inter-bank cross-border clearing and settlement is raised, an initiating bank sends request to the switch module, the banking switch select the network route;
if a third party clearing and settlement system is selected, the switch module routes to the third party clearing and settlement systems and finishes the transaction with a receiving bank;
if the blockchain route is selected, a blockchain based transaction process as follow: the information of transaction sends to the specific clearing and settlement service system for encrypting the original information of transaction by the encryption and decryption module to generate a specific stable coin, performing blockchain broadcast by the blockchain interactor to deploy to the specific blockchain ledger, sending message to the receiving bank, and the specific clearing and settlement service system of the receiving bank decrypts the specific stable coin to finish the transaction.

2. The inter-bank cross-border clearing and settlement system of claim 1, wherein one or more intermediary banks deployed with the specific clearing and settlement service system, are provided between the initiating bank and the receiving bank for at least one of which do not deploy with the specific clearing and settlement service system to execute the clearing and settlement service.

3. The inter-bank cross-border clearing and settlement system of claim 1, wherein the specific stable coin embeds with DID information as follows: transaction initiator information, transaction receiver information, traction description and AML/KYC information.

4. The inter-bank cross-border clearing and settlement system of claim 3, wherein the DID information also includes user behavior profiling as follows: transaction type, transaction risk and credit risk.

5. The inter-bank cross-border clearing and settlement system of claim 3, wherein a monitoring and auditing tool is provided for participants of the transaction and/or regulatory parties with authorized permission to inspect the information of the specific stable coin.

6. The inter-bank cross-border clearing and settlement system of claim 1 and claim 2, wherein a blockchain based transaction process between parties both deployed with the specific clearing and settlement service system,
a. initiation: the initiating party send a remittance message to the specific clearing and settlement service system;
b. verification: the specific clearing and settlement service system checks for message format, duplicate entries, digital signature legitimacy, and business legitimacy;
c. parsing and ledger update: the specific clearing and settlement service system checks whether the available balance of the specific stable coin in the account of the initiating party can meet the amount of the transaction, then parses the transaction information in the message which serves as the basic transaction information for blockchain ledger entries; the transaction currency is converted into the corresponding specific stable coin with the transaction amount; the blockchain addresses of the transaction parties are the chain addresses of the initiating and receiving the message; the encryption and decryption module encrypts the original transaction message to create an encrypted message, which is then used as the input information in the blockchain ledger's memo;
d. reception: when the message handling module of the receiving party detects a block change in its blockchain address, the receiving party retrieves the new block information pass it to the encryption and decryption module to decrypt the memo in the block transaction information to obtain the original message and forward to the receiving party.

7. The inter-bank cross-border clearing and settlement system of claim 6, wherein the bank which does not deploy with the specific clearing and settlement service system deals the clearing and settlement service with the intermediary bank by the third party clearing and settlement system; and a blockchain based transaction process is raised between the intermediary banks and /or the bank which deploy with the specific clearing and settlement.
